# EUROPEAN PATENT SPECIFICATION

(11) **EP 4 393 895 B1**
(45) Date of publication and mention of the grant of the patent: **02.10.2024**
(21) Application number: 23738810.3
(22) Date of filing: 29.05.2023
(51) Int. Cl.: C03C 25/002, C03C 25/005, C03C 25/1095, C03C 25/475

(54) **PROCEDURE FOR TRANSFORMING FIBREGLASS FABRIC**
VERFAHREN ZUR UMWANDLUNG VON GLASFASERGEWEBE
PROCEDE POUR TRANSFOMRER UN TISSU EN FIBRE DE VERRE

(30) Priority: 03.06.2022 ES 202230487
(43) Date of publication of application: 03.07.2024
(73) Proprietor: Dieguez Docampo, Samuel, 36418 Mos (Pontevedra) (ES)
(72) Inventor: Dieguez Docampo, Samuel, 36418 Mos (Pontevedra) (ES)
(74) Representative: López Camba, Emilia
(86) International application number: PCT/ES2023/070353
(87) International publication number: WO 2023/233056

(56) References cited:
- EP-A2- 0 281 865
- WO-A1-2016/064101
- CN-A- 103 522 680
- CN-A- 103 522 680
- GB-A- 1 528 416
- JP-A- 2010 031 425
- US-A- 3 532 482

## Description

### OBJECT OF THE INVENTION

The object of the present invention, as the title of the invention indicates, is to establish a procedure for transforming a fibreglass fabric into a fabric that has the particularity of having a carbon fibre appearance for use on electrical circuits that require the insulation offered by carbon fibre.

The present invention features the particular characteristics of the elements and steps of the procedure object of the invention so that it is possible to transform a fibreglass fabric into a fabric with an appearance similar to carbon fibre, where the new fabric is not an electrical conductor, and is used on electrical circuits that require insulation.

Therefore, the present invention is confined within the scope of carbon fibre and fibreglass.

### BACKGROUND OF THE INVENTION

Carbon fibre is a synthetic fibre made up of thin filaments of 5-10 µm in diameter and composed mainly of carbon. Each carbon fibre is the union of thousands of carbon filaments. It is a synthetic fibre because it is made from polyacrylonitrile. It has mechanical properties similar to steel and is as light as wood or plastic. Due to its hardness, it has greater impact strength than steel.

Carbon fibre conducts electricity, and in those cases where it is required to use on electrical circuits and insulation is sought, it cannot be used.

Therefore, it is the object of the present invention to develop a procedure that allows us to obtain a fabric with an appearance similar to carbon fibre but that is insulating, that is, not electrically conductive. Document JP2010031425-A discloses mechanically modifying glass fabrics by the application of pressure.

### DESCRIPTION OF THE INVENTION

The object of the present invention is essentially contained in the independent claim and the different embodiments are contained in the dependent claims.

The object of the present invention is a procedure for transforming a fibreglass fabric so that a fabric with carbon fibre appearance is achieved, where the new fabric obtained is not electrically conductive.

The procedure can comprise a first phase of geometric transformation of the fibreglass by pressure and temperature to the desired shape to follow with a second phase of application and deposition of pigments in different layers that are applied in a liquid manner with certain curing times.

It is also possible to carry out the procedure where the first phase is the phase of application and deposition of the pigments in different layers, while the second phase is the phase of geometric transformation of the fibreglass to which the pigments have already been applied in different layers, a transformation that takes place by pressure and temperature.

The phase of geometric transformation of the fibreglass is carried out by the application of pressure and temperature or at least the pressure and temperature ranges, to the desired shape for its subsequent application and deposition of the pigments in different layers; these layers are applied under application and liquid deposition with intermediate curing times of 1:30 h under controlled temperature conditions that can vary but which are key to giving it the depth in the different phases of each layer and achieving the appearance of carbon fibre.

The deposition of pigments is carried out in several phases and in several layers by application and liquid deposition; this deposition achieves through the different layers of a thickness of approximately between 5 and 10 microns a natural appearance of carbon fibre in a non-conductive fabric such as fibreglass.

Optionally, the procedure may be carried out on a flat area and apply or deposit the colour and then transform it geometrically.

The purpose is to be able to use the fabric obtained indoors or outdoors of vehicles comprising and or covering electrical circuits to avoid couplings because carbon fibre is electrically conductive and fibreglass is insulating.

This makes it possible to use it, for example, in car steering wheels requiring a sensor which detects whether the driver is touching the steering wheel (hand off detection system) and that have a double capacitive circuit for the front and the rear or for the sides etc. This would prevent the coupling of the electric field because the non-conductive system of the fibreglass and the characteristics of the non-conductive fibreglass would prevent that coupling.

The appearance of carbon fibre means a commercial and functional advantage to the new fabric obtained because it has not been possible to manufacture or apply carbon fibre in steering wheels with double circuit or triple capacitive circuit detection system since there is a coupling between the electric field of those of the circuits and prevents that the different circuits can be calibrated independently.

Therefore, the new fabric, in addition to presenting an appearance such as carbon fibre, presents a functional particularity with respect to its electrical conductivity, since it presents some conductivity being applicable where it must be in contact with electrical circuits, not producing any coupling. That is, there is no coupling of signals or electric fields.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### PREFERRED EMBODIMENT OF THE INVENTION

In a preferred embodiment of the invention in the phase of geometric transformation of the fibreglass pressure is applied that ranges from 3 bar to 7 bar, preferably 5 bar at a temperature comprised within a range from 120°C to 140°C, preferably 130°C, for a time of about 15 to 20 minutes.

The phase of application and deposition of pigments is carried out in several phases and in several layers, preferably, it is carried out in four phases obtaining in each phase a layer with a thickness of between 5 to 10 microns with intermediate curing times within a range from 70 minutes to 110 minutes, preferably 90 minutes, under controlled temperature conditions, in a preferred range from 16 to 23°C, which can vary but which are key to giving it the depth in the different phases of each layer and achieving a non-conductive fabric with carbon fibre appearance.

The pigments used in each of the phases are:
- Azoics, Black Carbon PG.
- With a 5% solution.

With the pigments used, a reflective metamerism similar to metallic pigments is achieved.

The order in which the phases of geometric transformation and application and deposition of pigments are applied is not limiting.

Carbon fibre has a peculiar appearance due to the geometric reflection metamerism and any treatment that is applied on any material for simulation does not produce the three-dimensional or metameric reflective effect that is achieved with real or natural carbon fibre.

Thanks to the applied procedure, it has been achieved that under different lighting conditions the real carbon colour samples and the simulated fibre obtained from fibreglass are indistinguishable.

## Claims

1. A procedure for transforming a fibreglass fabric comprising:
• a phase of geometric transformation of the fibreglass by pressure and temperature by applying a pressure within a range from 3 bar to 7 bar, at a temperature within a range from 120°C to 140°C, for a time between 15 and 20 minutes, and
• a phase of application and deposition of pigments in different layers that are applied in a liquid manner.
**characterized in that**
the subsequent phase of application and deposition of pigments, this phase is carried out in four phases, obtaining in each phase a layer with a thickness of between 5 to 10 microns, with intermediate curing times within a range from 70 minutes to 110 minutes, under controlled temperature conditions within a range from 16°C to 23°C.

2. Procedure for transforming a fibreglass fabric according to claim 1, **characterised in that** the pressure applied during the transformation phase is 5 bar, while the temperature applied is 130°C.

3. Procedure of transformation of a fibreglass fabric according to any of the preceding claims, **characterized in that** the pigments used are: Azoics, Black Carbon PG, with a 5% solution.

## Patentansprüche

1. Verfahren zur Umwandlung von Glasfasergewebe, umfassend:
- eine Phase der geometrischen Umwandlung der Glasfaser durch Druck und Temperatur durch Anlegen eines Drucks in einem Bereich von 3 bar bis 7 bar bei einer Temperatur in einem Bereich von 120 °C bis 140 °C für einen Zeitraum zwischen 15 und 20 Minuten und:
- eine Phase des Auftragens und Abscheidens von Pigmenten in verschiedenen Schichten, die flüssig aufgetragen werden,
**dadurch gekennzeichnet, dass**
diese anschließende Phase des Auftragens und Abscheidens von Pigmenten in vier Phasen durchgeführt, wobei in jeder Phase eine Schicht mit einer Dicke zwischen 5 und 10 Mikrometern mit Zwischenhärtungszeiten in einem Bereich von 70 Minuten bis 110 Minuten unter kontrollierten Temperaturbedingungen in einem Bereich von 16 °C bis 23 °C erhalten wird.

2. Verfahren zur Umwandlung von Glasfasergewebe nach Anspruch 1, **dadurch gekennzeichnet, dass** der während der Umwandlungsphase angewendete Druck 5 bar beträgt, während die angewendete Temperatur 130 °C beträgt.

3. Verfahren zur Umwandlung von Glasfasergewebe nach einem der vorhergehenden Ansprüche, **dadurch gekennzeichnet, dass** die folgenden Pigmente verwendet werden: Azoics, Black Carbon PG, in einer 5%-igen Lösung.

## Revendications

1. Procédé pour transformer un tissu en fibre de verre comprenant les étapes suivantes :
- une étape de transformation géométrique de la fibre de verre par pression et température en appliquant une pression comprise dans une plage de 3 bars à 7 bars, à une température comprise dans une plage de 120 °C à 140 °C, pendant une durée comprise entre 15 et 20 minutes, et
- une étape d'application et de dépôt de pigments en différentes couches qui sont appliquées de manière liquide,
caractérisé parce que
l'étape ultérieure d'application et de dépôt de pigments est réalisée en quatre phases, chaque phase permettant d'obtenir une couche d'une épaisseur comprise entre 5 et 10 microns, avec des temps de durcissement intermédiaires compris dans une plage de 70 minutes à 110 minutes, dans des conditions de température contrôlées dans une plage de 16 °C à 23 °C.

2. Procédé pour transformer un tissu en fibre de verre selon la revendication 1, caractérisé parce que la pression appliquée pendant l'étape de transformation est de 5 bars, tandis que la température appliquée est de 130 °C.

3. Procédé pour transformer un tissu en fibre de verre selon l'une quelconque des revendications précédentes, caractérisé parce que les pigments utilisés sont les suivants : Azoïques, Black Carbon PG, avec une solution à 5 %.
